Europäisches Patentamt

European Patent Office

Office européen des brevets

(11) Numéro de publication: **0 422 987 A1**

## DEMANDE DE BREVET EUROPEEN

(21) Numéro de dépôt: 90402725.7

(22) Date de dépôt: 02.10.90

(51) Int. Cl.⁵: **H01G 1/005**, H01G 4/30, C04B 41/51

(30) Priorité: 09.10.89 FR 8913142

(43) Date de publication de la demande:
17.04.91 Bulletin 91/16

(84) Etats contractants désignés:
**AT DE FR GB IT**

(71) Demandeur: **COMPAGNIE EUROPEENNE DE COMPOSANTS ELECTRONIQUES LCC**
**50, rue Jean -Pierre Timbaud B.P. 301**
**F-92402 Courbevoie(FR)**

(72) Inventeur: **Hardy, Patrick**
**THOMSON-CSF, SCPI, Cédex 67**
**F-92045 Paris la Défense(FR)**

(74) Mandataire: **Ruellan-Lemonnier, Brigitte**
**THOMSON-CSF SCPI**
**F-92045 PARIS LA DEFENSE CEDEX 67(FR)**

(54) **Structure composite résistant aux chocs thermiques, et application aux condensateurs céramiques multicouches.**

(57) L'invention concerne une structure composite de type multicouche résistant à des chocs thermiques et formée d'une alternance de couches réalisées à partir d'un premier et d'un deuxième matériau, le premier matériau ayant un coefficient de diffusivité thermique plus élevé que le deuxième matériau. La répartition des couches et leur épaisseur sont telles qu'il existe, dans l'épaisseur de la structure, des zones (4) formées d'une alternance de couches du premier matériau (1, 2) et du deuxième matériau, ces zones étant séparées les unes des autres par une couche épaisse (5) réalisée dans le deuxième matériau.
Application aux condensateurs céramiques multicouches.

FIG_2

EP 0 422 987 A1

# STRUCTURE COMPOSITE RESISTANT AUX CHOCS THERMIQUES ET APPLICATION AUX CONDENSA-TEURS CERAMIQUES MULTICOUCHES.

La présente invention concerne des structures composites, en particulier des condensateurs céramiques multicouches, possédant de hautes propriétés thermo-mécaniques.

Aussi bien dans le domaine des substrats céramiques multicouches, que dans celui des condensateurs céramiques multicouches ou tout autre structure multicouche de même type, les propriétés de résistance aux chocs thermiques sont toujours critiques. Ainsi, dans la technologie CMS (composants pour le montage en surface) qui est de plus en plus employée, le procédé de soudure la vague haute température (c'est-à-dire pour une température égale ou supérieure 260° C) impose des contraintes thermo-mécaniques élevées aux composants souder.

Dans le cas des condensateurs céramiques multicouches, il n'existe pas de structure adaptée de façon spécifique pour absorber les chocs thermiques. Seules les dimensions des composants sont limitatives et permettent d'orienter le choix du matériau ou du produit recherché en fonction de sa destination. Selon les formats des composants on utilisera telle ou telle méthode de soudure. Ainsi pour des condensateurs de formats 0805 à 1210, on pourra utiliser une soudure à la vague ("flow" dans la technologie anglo- saxonne), ce qui impose un fort gradient de température dans le composant. Pour des condensateurs de formats 1812 2220 et plus, on doit utiliser une soudure par refusion ("reflow" dans la terminologie anglo-saxonne), ce qui amène un faible gradient de température dans le composant. Pour ces derniers formats, une soudure à la vague conduirait à un taux de déchets beaucoup trop élevé. On rappelle que les formats cités sont ceux de la standardisation internationale EIA (Electronic International Association) et que les deux premiers chiffres correspondent à la longueur du composant en millièmes de pouce, tandis que les deux derniers chiffres correspondent à sa largeur en millièmes de pouce.

Actuellement, dans le domaine des condensateurs CMS multicouches, il ne peut être question de reporter des composants de format 2220 par un procédé de soudure à la vague sans une préchauffe très importante (la différence de température maximale entre la température de la vague et la température maximale de préchauffe est située entre 120 et 130° C) qui est destinée à réduire le gradient de température subi par le composant en dessous du gradient de température critique de fracture.

Afin de pallier ces inconvénients et selon la présente invention, on prévoit de réaliser, dans une structure composite de type multicouche, des zones à répartition particulière selon la valeur du coefficient de diffusivité thermique des matériaux utilisés.

L'invention a donc pour objet une structure composite de type multicouche résistant à des chocs thermiques et formée d'une alternance de couches réalisées à partir d'un premier et d'un deuxième matériau, le premier matériau ayant un coefficient de diffusivité thermique plus élevé que le deuxième matériau, caractérisée en ce que la répartition des couches et leur épaisseur sont telles qu'il existe, dans l'épaisseur de la structure, des zones formées d'une alternance de couches du premier matériau et du deuxième matériau, ces zones étant séparées les unes des autres par une couche épaisse réalisée dans le deuxième matériau.

L'invention a aussi pour objet un condensateur multicouche comprenant des couches de diélectrique séparées par des électrodes, caractérisé en ce qu'il est constitué selon la structure définie ci-dessus, les électrodes étant réalisées dans le premier matériau et les couches de diélectrique étant réalisées dans le deuxième matériau.

L'invention sera mieux comprise et d'autres avantages apparaîtront la lecture de la description qui va suivre, donnée à titre non limitatif, et grâce aux figures annexées parmi lesquelles :
- la figure 1 est une vue en coupe d'un condensateur multicouche selon l'art connu,
- la figure 2 est une vue en coupe d'un condensateur multicouche selon l'invention,
- la figure 3 est une variante de condensateur multicouche selon l'invention.

On peut assimiler la structure élémentaire composée par une lame diélectrique associée à une lame conductrice à un élément bilame simple caractérisé essentiellement par les propriétés de diffusivité thermique et de dilatation des matériaux employés.

Dans le cas d'un bilame céramique-métal, la diffusivité du métal (par exemple une électrode métallique) vaut environ 100 fois celle de la céramique (par exemple une couche diélectrique). Ce différentiel de diffusivité amplifie la déformation de ce bilame élémentaire du fait des coefficients de dilatation différents des matériaux employés, surtout lorsque l'élévation de température est élevée pendant un temps très court (choc thermique). De ce fait, lorsque la contrainte, développée dans la céramique à cause du choc thermique, dépasse la contrainte limite de fracture, il y a rupture de la structure composite.

Selon la présente invention, on a constaté et vérifié que si on crée dans une structure composite de type multicouche, des zones à répartition particulière des couches formant la structure selon la valeur du coefficient de diffusivité thermique des matériaux utilisés, alors les pièces ainsi constituées sont beaucoup plus résistantes aux chocs thermiques. En particulier pour les condensateurs céramiques de type multicouche, si on crée des zones à répartition particulière du volume d'électrodes au sein du volume de céramique, on peut considérer que lors d'un choc thermique des zones uniquement en céramique exerceront des contre-poussées qui équilibreront les forces exercées par des zones mixtes métal-céramique.

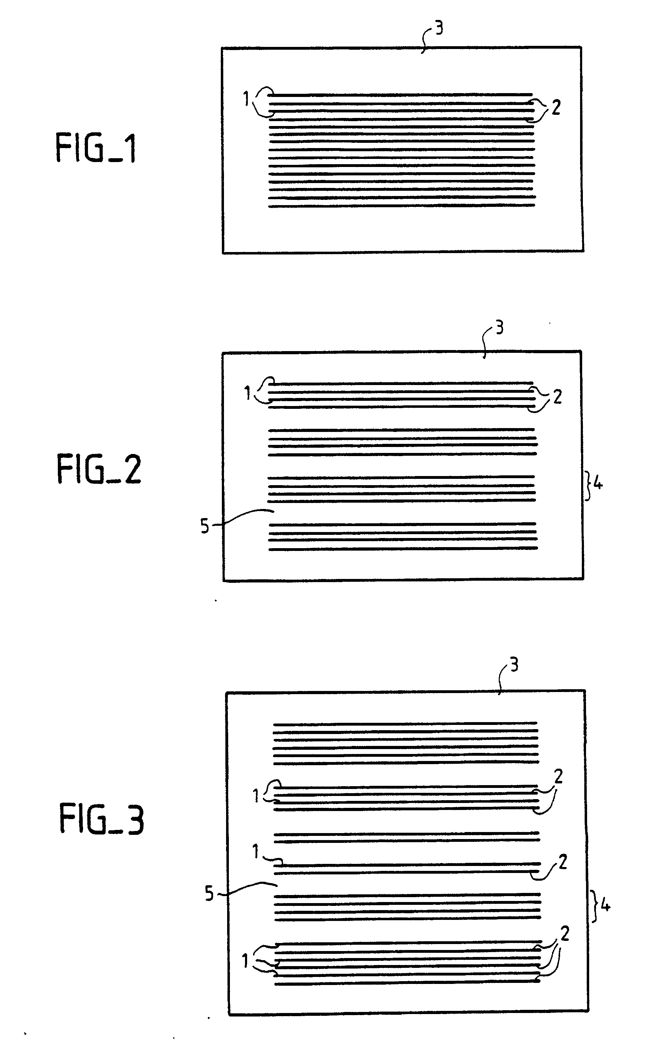

La figure 1 représente une vue en coupe d'un condensateur multicouche à diélectrique céramique selon l'art connu. La coupe a été effectuée parallèlement aux terminaisons électriques du condensateur. On reconnaît sur cette figure, vues en tranche, les électrodes impaires 1 et paires 2, noyées dans une masse de céramique 3. En fait, la masse de céramique est constituée de couches alternant avec les électrodes et régulièrement espacées.

La figure 2 représente une vue sous la même coupe que précédemment d'un condensateur multicouche selon l'invention. Les mêmes références qu'à la figure 1 représentent les mêmes éléments. Dans ce cas également, les électrodes paires sont connectées entre elles par la terminaison correspondante non représentée. Il en va de même pour les électrodes impaires. Comme le montrent les figures 1 et 2, le volume total occupé par le condensateur selon l'invention est plus important que pour le condensateur selon l'art connu du fait de la création de zones mixtes telles que 4 séparées les unes des autres par une couche épaisse de céramique 5. L'augmentation d'épaisseur des composants selon l'invention est une caractéristique qui va à l'encontre des tendances très fortes qui poussent à la réduction des dimensions des composants CMS. Cependant, cette augmentation de volume reste minime (12 %.au maximum pour les plus gros formats). Elle est en tout cas moins importante que ne le laissent supposer les figures et reste secondaire en regard des avantages procurés qui von( être révélés par les essais énumérés ci-dessous.

Des composants capacitifs en matériau diélectrique de type II, de la classe X7R qui est la classe de matériaux la plus sensible aux chocs thermiques, ont été réalisés dans les formats suivants 2220 et 6360 (norme EIA), selon l'art antérieur et selon l'invention. Les électrodes internes sont en alliage palladium-argent et les terminaisons électriques en alliage palladium-argent ou palladium-argent-platine. Le test réalisé consiste en une immersion subite sans préchauffe (test dit de choc thermique extrême) dans un bain de soudure étain-plomb (60 % d'étain pour 40 % de plomb, en poids) à 260°C. Les tests électriques réalisés avant et après le choc thermique consistent à mesurer la capacité nominale, l'angle de pertes tg δ et la résistance d'isolement. On a également effectué un test visuel avec un grossissement de 50 et un test de rupture 3 points en mode flexion. L'ensemble de ces tests permet d'être pratiquement sûr que tous les cas de fractures seront repérés. Les résultats obtenus sont répertoriés dans le tableau 1 placé en fin de description.

Les composants n° 1 (0,33 μF) et 3 (4,7 μF) sont des composants selon l'art connu, de format respectif 2220 et 6360. Les composants n° 2 (0,3 μF soit 5 % de capacité en moins pour le format) et 4 (4 μF soit 13 % de capacité en moins pour le format) sont des composants selon l'invention, de format respectif 2220 et 6360. Les tests ont été réalisés sur 3 séries de 400 pièces à chaque fois.

Ce tableau montre clairement tout l'intérêt de l'invention, surtout pour les composants de grosses dimensions.

On a constaté d'autre part, qu'on peut encore améliorer la résistance aux chocs thermiques en modulant le nombre d'électrodes par zone mixte telle que 4 sur la figure 2. Ainsi, il est préférable que les zones du centre du composant aient peu d'électrodes et que ce nombre d'électrodes par zone augmente dans une direction allant du centre du composant à sa surface. C'est ce qu'illustre la figure 3 où les mêmes références qu'à la figure 2 représentent les mêmes éléments.

Enfin, une amélioration supplémentaire à la structure selon l'invention consiste à faire en sorte que les couches diélectriques aient une épaisseur de plus en plus mince en allant du centre de la structure vers l'extérieur.

La présente invention s'applique particulièrement bien au cas des condensateurs multicouches mais pas exclusivement. Ainsi, l'invention peut s'appliquer à toute structure multicouche associant des couches diélectriques et des couches métalliques (par exemple un substrat céramique à coeur métal réalisant un drain thermique). Elle peut s'appliquer aussi aux blindages contre les impulsions électromagnétiques réalisés en structure composite céramique-métal. D'une manière générale, l'invention s'applique à toute structure composite multicouche pouvant subir un choc thermique et constituée d'au moins deux matériaux présentant des coefficients de diffusivité thermique nettement différents.

TABLEAU 1

| N° | Epaisseur | Nombre d'électrodes | % de fractures |
|---|---|---|---|
| 1 | 1,8 mm | 36 | 10 % |
| 2 | 1,8 mm | 3 x 12 | 0 % |
| 3 | 2,4 mm | 38 | 48 % |
| 4 | 2,4 mm | 5 x 8 | 0 % |

**Revendications**

1 - Structure composite de type multicouche résistant à des chocs thermiques et formée d'une alternance de couches réalisées à partir d'un premier et d'un deuxième matériau, le premier matériau ayant un coefficient de diffusivité thermique plus élevé que le deuxième matériau, caractérisée en ce que la répartition des couches et leur épaisseur sont telles qu'il existe, dans l'épaisseur de la structure, des zones (4) formées d'une alternance de couches du premier matériau (1, 2) et du deuxième matériau, ces zones étant séparées les unes des autres par une couche épaisse (5) réalisée dans le deuxième matériau.

2 - Structure composite selon la revendication 1, caractérisée en ce que l'épaisseur desdites zones croît dans une direction allant du centre de la structure à sa surface.

3 - Structure composite selon l'une des revendications 1 ou 2, caractérisée en ce que l'épaisseur des couches du deuxième matériau décroît dans une direction allant du centre de la structure à sa surface.

4 - Condensateur multicouche comprenant des couches de diélectrique séparées par des électrodes (1,2), caractérisé en ce qu'il est constitué par une structure selon l'une quelconque des revendications 1 à 3, les électrodes étant réalisées dans le premier matériau et les couches de diélectrique étant réalisées dans le deuxième matériau.

FIG_1

FIG_2

FIG_3

Office européen
des brevets

**RAPPORT DE RECHERCHE
EUROPEENNE**

Numéro de la demande

**EP 90 40 2725**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-2 589 831   (A. LIECHTI)<br>* colonne 5, lignes 3 - 7; revendication 1; figure 10 *<br>— — — | 1,4 | H 01 G<br>1/005<br>H 01 G 4/30<br>C 04 B 41/51 |
| X | DE-A-3 150 047   (MURATA MANUFACTURING)<br>* revendication 1; figure 9 *<br>— — — | 1,4 | |
| X | US-A-4 663 694   (Y. SAKAMOTO)<br>* colonne 1, ligne 60 - colonne 2, ligne 16; revendication 1; figure 3 *<br>— — — | 1,4 | |
| X | FR-A-2 528 618   (EUROFARAD)<br>* revendications 1-7; figure 1 *<br>— — — — — | 1,4 | |

| DOMAINES TECHNIQUES RECHERCHES (Int. Cl.5) |
|---|
| H 01 G<br>C 04 B<br>B 32 B |

Le présent rapport de recherche a été établi pour toutes les revendications

| Lieu de la recherche | Date d'achèvement de la recherche | Examinateur |
|---|---|---|
| La Haye | 07 janvier 91 | PUHL A.T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant